# EUROPÄISCHE PATENTSCHRIFT

(11) **EP 4 448 936 B1**
(45) Veröffentlichungstag und Bekanntmachung des Hinweises auf die Patenterteilung: **11.02.2026**
(21) Anmeldenummer: 22839716.2
(22) Anmeldetag: 16.12.2022
(51) Int. Cl.: F01P 5/06, F01P 11/10, F01P 5/10, F01P 5/12, B60K 11/02, B60K 11/00, B60K 11/06

(54) **KÜHLERLÜFTERMODUL FÜR EIN KRAFTFAHRZEUG**
COOLING FAN MODULE FOR A MOTOR VEHICLE
MODULE DE VENTILATEUR DE REFROIDISSEMENT POUR UN VÉHICULE MOTORISÉ

(30) Priorität: 17.12.2021 DE 102021214620
(43) Veröffentlichungstag der Anmeldung: 23.10.2024
(73) Patentinhaber: Robert Bosch GmbH, 70442 Stuttgart (DE)
(72) Erfinder: YILMAZ, Fatih, 22457 Hamburg (DE)
(86) Internationale Anmeldenummer: PCT/EP2022/086325
(87) Internationale Veröffentlichungsnummer: WO 2023/111257

(56) Entgegenhaltungen:
- WO-A1-2020/083495
- DE-A1- 102014 208 395
- DE-A1- 102014 224 978
- FR-A1- 2 965 297
- US-A- 6 016 774
- US-A1- 2014 299 735

## Beschreibung

Die Erfindung geht aus von einem Kühlerlüftermodul nach Gattung des unabhängigen Anspruches.

### Stand der Technik

Aus dem Stand der Technik sind bereits Aggregathalter bekannt. Diese werden in der Regel an Karosseriebauteilen befestigt. Zur Bereitstellung einer ausreichend stabilen Anbindung weisen derartige Aggregathalter im Anbindungsbereich zur Karosserie Versteifungselemente, wie beispielsweise zusätzliche Metallhalterkomponenten auf.

Mit der FR 2 965 297 A1 und der US 6 016 774 A sind Vorrichtungen bekannt geworden, bei denen Pumpaggregate an einer Kühlergebläse-Zarge befestigt sind.

Die US 2014/299735 A1, die DE 10 2014 208395 A1, die DE 10 2014 224978 A1 und die WO 2020/083495 A1 zeigen Pumpaggregate, die mittels unterschiedlicher Entkopplungselementen in einem Aggregathalter gelagert sind, der beispielsweise direkt am Kraftfahrzeug befestigt ist.

### Offenbarung der Erfindung

### Vorteile der Erfindung

Die Erfindung geht auf von einem Kühlerlüftermodul für ein Fahrzeug, aufweisend eine Kühlerzarge und ein an der Kühlerzarge befestigtes Aggregatmodul, aufweisend einen elastischen Aggregathalter und ein im Aggregathalter aufgenommenes Aggregat, wobei der Aggregathalter eine das Aggregat umschließende Innenaufnahme aufweist.

Es wird vorgeschlagen, dass die Kühlerzarge ein Spreizelement aufweist, welches dazu ausgebildet ist die Innenaufnahme des Aggregathalters zu spreizen.

Das erfindungsgemäße Kühlerlüftermodul mit den Merkmalen des unabhängigen Anspruches hat den Vorteil, dass das Aggregat besonders kostoptimiert und bauraumsparend im Fahrzeug befestigt werden kann. Gleichzeitig kann aufgrund der durch die Spreizung entstehenden Radialspalte zwischen dem Aggregathalter und dem Aggregat Schwingungen und Vibrationen zwischen dem Aggregat und der Kühlerzarge vorteilhaft reduziert werden, sodass die Geräuschübertragung reduziert werden kann.

Ein Aggregat der hier zur Rede stehenden Art kann insbesondere eine Pumpe, besonders bevorzugt eine Kühlkreislaufpumpe sein. Der Aggregathalter ist vorzugweise dazu ausgebildet das Aggregat aufzunehmen. Vorzugweise wird das Aggregat in den Aggregathalter eingesteckt. Besonders bevorzugt umschließt der Aggregathalter das Aggregat. Gemäß einer bevorzugten Weiterbildung der Erfindung liegt der Aggregathalter außerhalb der Spreizabschnitte flächig an der Mantelfläche des Aggregates an.

Ein Kühlerlüftermodul der hier zur Rede stehenden Art kann beispielsweise zum Kühlen von Motorkomponenten in einem Fahrzeug verwendet werden. Typischerweise weist ein derartiges Kühlerlüftermodul neben der Kühlerzarge ein Lüfterrad auf, welches in der Kühlerzarge aufgehängt ist.

Im Rahmen der vorliegenden Erfindung kann unter einem Spreizelement ein Mittel verstanden werden, welches dazu geeignet ist eine derart große Spreizkraft auf den Aggregathalter zu übertragen, dass sich der Aggregathalter lokal vom Aggregat löst und gleichzeitig eine ausreichende Flächenpressung zur Befestigung außerhalb der Spreizabschnitte auf das Aggregat bereitgestellt werden kann. Im Rahmen der vorliegenden Erfindung kann unter einem Spreizelement insbesondere ein Führungselement verstanden werden, welches derart ausgebildet ist diese Spreizkraft auf den Aggregathalter zu übertragen. Vorzugweise ist das Spreizelement als eine Verbindung aus einer schrägen Anstellung eines Führungselementes und einem Rastelement ausgebildet.

Gemäß einer vorteilhaften Weiterbildung der Erfindung spreizt das Spreizelement den Aggregathalter in einem Spreizabschnitt derart auf, dass zwischen der Innenaufnahme des Aggregathalters und dem Aggregat ein Radialspalt ausgebildet ist. Vorzugweise beträgt der Radialspalt zumindest eine Größe von 0,2mm. Vorzugweise sind im Spreizabschnitt die Innenaufnahme des Aggregathalters und das Aggregat, insbesondere eine Mantelfläche des Aggregates voneinander beabstandet ausgebildet.

Erfindungsgemäß weist die Kühlerzarge eine erstes Führungselement und ein, vom ersten Führungselement beanstandetes zweites Führungselement aufweist. Erfindungsgemäß wirken die Führungselemente jeweils formschlüssig mit einem entsprechenden Befestigungselement des Aggregathalters zusammen. Besonders vorzugweise greift das Führungselement formschlüssig in das Befestigungselement ein. Besonders vorzugweise kann das Führungselement in das Befestigungselement eingeschoben werden. Erfindungsgemöß weist jedes Führungselement einen Spreizelementabschnitt auf. Erfindugnsgemäß sind die Spreizelementabschnitte dazu ausgebildet die Innenaufnahme in einem entsprechenden Spreizabschnitt zu verformen.

Im Rahmen der vorliegenden Erfindung ist unter einem Befestigungselement ein Element zu verstehen, welches dazu ausgebildet ist bei der Montage des Aggregathalters an der Kühlerzarge mit dem Führungselement ein Wirkflächenpaar auszubilden, welches den Freiheitsgrad des Aggregathalters entsprechend einschränkt. Das Führungselement ist somit dazu ausgebildet aufgrund seiner Formgebung ein unmittelbares Wirkflächenpaar mit dem Befestigungselement auszubilden. Vorzugweise wird das Führungselement vom Befestigungselement aufgenommen. Eine derartige formschlüssige Verbindung ermöglicht ein einfaches Einstecken, beziehungsweise Einschieben des Aggregathalters. Montage und Demontage des Aggregates sind somit deutlich vereinfacht. Vorzugweise sind die Führungselemente jeweils beabstandet voneinander an der Kühlerzarge angeordnet. Vorzugweise sind die Führungselemente derart voneinander beabstandet, dass das Aggregat zwischen den Führungselementen angeordnet werden kann. Der Abstand der Führungselemente zueinander ist somit vorzugweise größer als der Aggregatdurchmesser. Vorzugweise weist das Kühlerlüftermodul genau zwei Führungselemente auf. Der elastische Aggregathalter kann somit besonders vorteilhaft zwischen den Führungselementen verspannt eingehängt werden und bedarf keiner zusätzlichen Versteifungselemente, wie beispielsweise etwaige Metallhalter. Der Montageprozess des Aggregathalters im Fahrzeug kann somit um zumindest einen Verfahrensschritt, dem Montieren des Versteifungselementes, vorteilhaft reduziert werden. Es ist denkbar, dass verschiedenste, kundenspezifische Aggregathalter mit einer vordefinierten Gestaltung der Führungselemente korrespondieren können, sodass an der Kühlerzarge Aggregate verschiedenster Leistungsklassen aufgenommen werden können.

Gemäß einer vorteilhaften Weiterbildung der Erfindung liegt die Innenaufnahme des Aggregathalters im montierten Zustand außerhals der Spreizabschnitte im Wesentlichen vollständig, insbesondere flächig kontaktierend am Aggregat an.

Eine vorteilhafte Weiterbildung der Erfindung sieht vor, dass die Innenaufnahme vor der Montage an den Führungselementen der Kühlerzarge eine im Wesentlichen zylinderförmige Kontur aufweist, wobei die Spreizelementabschnitte dazu ausgebildet sind im jeweiligen Spreizabschnitt die Innenaufnahme aus der zylinderförmigen Kontur radial nach außen zu ziehen. Vorzugweise erfolgt dies über eine Kombination aus dem Spreizwinkel und den Spreizhaken. Vorzugweise sind die Spreizelementabschnitte dazu ausgebildet, jeweils eine erste Spreizkaft und eine zweite Spreizkraft auf den Aggregathalter aufbringen, wobei die Spreizkraftvektoren der Spreizkräfte vorzugweise im Wesentlichen zueinander entgegengesetzt ausgerichtet sind

Eine vorteilhafte Weiterbildung der Erfindung sieht vor, dass die Befestigungselemente des Aggregathalters an einer radialen Außenseite des Aggregathalters, insbesondere im Wesentlichen diametral gegenüberliegend angeordnet sind.

Vorzugweise überdecken die Spreizabschnitte jeweils einen Umfangswinkel der im Wesentlichen zylinderförmigen Innenaufnahme zwischen 35° und 85°, insbesondere zwischen 50° und 70° besonders bevorzugt von im Wesentlichen 60°. Im Restbereich des Umfangs liegt die Innenaufnahme vorzugweise kontaktierend am Aggregat an. Auf diese Weise kann sichergestellt werden, dass sowohl die Geräuschdämpfung als auch die Befestigungsfunktion gewährleistet sind.

Vorzugweise weicht der Radius der Spreizabschnitte im montierten Zustand vom Radius der Innenaufnahme im unmontierten Zustand ab. Vorzugweise weist die Innenaufnahme nach der Montage an den Führungselementen der Kühlerzarge aufgrund der Ausbuchtung der Spreizabschnitte eine unrunde, insbesondere eine im Wesentlichen ovale Kontur auf.

Gemäß einer besonders kostengünstigen und einfach zu montierenden Ausführungsform der Erfindung weisen die Spreizelementabschnitte Spreizhaken auf, welche dazu ausgebildet sind die Spreizkraft auf den Aggregathalter zu übertragen. Es ist auch denkbar, dass die Spreizelementabschnitte als Spreizhaken, insbesondere als Rasthaken ausgebildet sind, wobei insbesondere die Befestigungselemente jeweils eine Aufnahme für die Spreizhaken aufweisen. Eine besonders stabile Anbindung kann vorzugweise dadurch bereitgestellt werden, dass die Aufnahme als eine Anschlagsfläche im jeweiligen Befestigungselement ausgebildet ist.

Eine besonders stabile, einfach zu fertigende Vorrichtung kann vorzugweise dadurch bereitgestellt werden, dass der Aggregathalter, aufweisend die Befestigungselemente, einteilig ausgebildet ist und/oder, dass die Führungselemente und der jeweilige Spreizelementabschnitt einteilig ausgebildet sind.

Vorzugweise wird der Radialspalt, das heißt der radiale Abstand zwischen dem Aggregat und der Innenaufnahme des Aggregathalters des jeweiligen Spreizabschnittes mit zunehmendem Abstand vom Kraftangriffspunkt des Spreizelementabschnittes am Aggregathalter kleiner. Gemäß einer vorteilhaften Weiterbildung der Erfindung ist der Spreizabschnitt im Wesentlichen sichelförmig ausgebildet.

Eine vorteilhafte Weiterbildung der Erfindung sieht vor, dass die Führungselemente in Richtung des Aggregates geneigt an der Kühlerzarge angeordnet sind, insbesondere unter einem Spreizwinkel zwischen 1° und 20°, vorzugweise zwischen 2° und 15°, besonders vorzugsweise zwischen 3° und 10° zur Kühlerzargenflächennormalen angeordnet ist. Durch den Spreizwinkel kann der Aggregathalter während dem Einschieben besonders einfach aufgespreizt werden. Vorzugweise sind die Führungselemente einteilig an der Kühlerzarge angeformt.

Gemäß einer besonders bevorzugten Weiterbildung der Erfindung ist der der Aggregathalter einteilig aus einem Elastomer ausgebildet. Vorzugweise besteht der Aggregathalter aus einem Elastomer., insbesondere aus einem Elastomer besteht.

Eine vorteilhafte Weiterbildung der Erfindung sieht ferner vor, dass die Führungselemente in einem radial äußeren Randbereich der Kühlerzarge angeordnet sind

### Zeichnungen

In den Zeichnungen sind Ausführungsbeispiele des Kühlerlüftermoduls und des Aggregathalters abgebildet/dargestellt und in der nachfolgenden Beschreibung näher erläutert. Es zeigen
Figur 1 einen Ausschnitt einer perspektivischen Ansicht eines Kühlerlüftermoduls mit einem eingespannten Aggregat,
Figur 2 einen Ausschnitt einer perspektivischen Ansicht eines Kühlerlüftermoduls, welches zur verbesserten Darstellung ohne Aggregat abgebildet ist,
Figur 3a ein Aggregathalter vor der Montage an einer Kühlerzarge,
Figur 3b ein Aggregathalter vor der Montage an einer Kühlerzarge

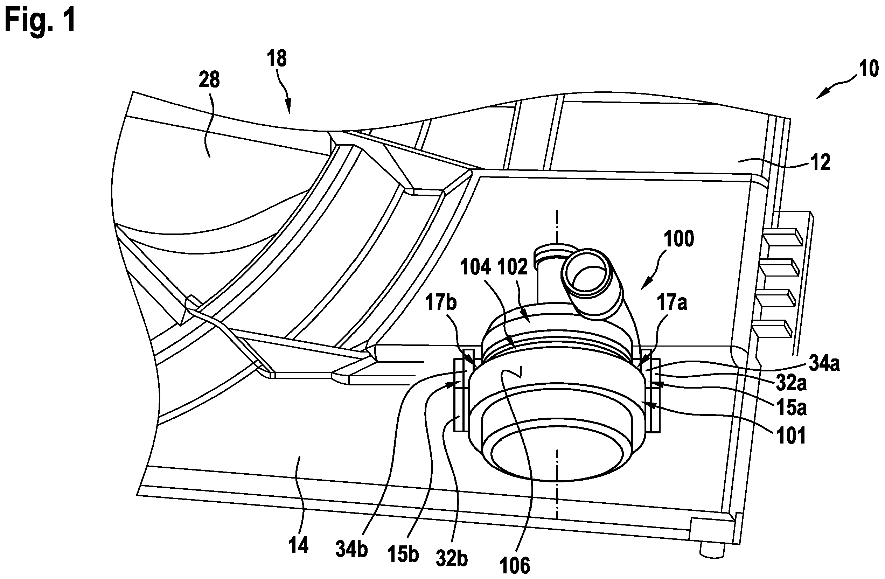

Fig. 1 zeigt eine perspektivische Darstellung eines Kühlerlüftermoduls 10. Ein solches Kühlerlüftermodul 10 wird beispielsweise an den Kühler Kraftfahrzeuges angesetzt und überdeckt vorzugweise im Wesentlichen die Luftdurchtrittsfläche des Kühlers. Üblicherweise wird das Kühlerlüftermodul 10 auf der in Luftströmungsrichtung gesehen hinteren Seite des Kühlers angeordnet, kann aber auch in anderen Fällen in Luftströmungsrichtung vor der Lufteintrittsfläche des Kühlers angeordnet sein.

Das Kühlerlüftermodul 10 weist eine Kühlerzarge 12 auf, die vorzugweise mit entsprechenden Befestigungselementen versehen ist, um diese und damit das Kühlerlüftermodul an einem Kühler bzw. der Karosserie eines Fahrzeuges zu befestigen. Die Kühlerzarge 12 weist vorzugsweise eine im Wesentlichen geschlossenen Zargenabdeckung 14 auf. Vorzugweise weist die Kühlerzarge 12 ferner eine im Wesentlichen kreisrunde Gebläseöffnung 18 auf. Vorzugweise deckt die Zargenabdeckung 14 den Bereich der Kühlerzarge 12 außerhalb der Gebläseöffnung 18 gegen einen Luftdurchtritt ab, so dass durch die Luftdurchtrittsfläche eines Kühlers hindurchtretende Luft im Wesentlichen, vorzugweise vollständig durch die Gebläseöffnung 18 und damit durch ein Gebläserad 26 strömt. Vorzugsweise weist die Kühlerzarge 12 Streben auf, die der Halterung eines Gebläsemotors (hier nicht dargestellt), insbesondere der Halterung eines Elektromotors in der Öffnung 18 der Zarge dienen. Mit dem Elektromotor wirkverbunden ist vorzugweise ein Lüfter- bzw. Gebläserad, welches über Lüfterschaufeln verfügt, die vorzugweise zentral über eine Lüfternabe miteinander verbunden sind.

Die Kühlerzarge 12 besteht vorzugweise im Wesentlichen aus Kunststoff und kann beispielsweise in einem Spritzgussverfahren hergestellt werden. An der Kühlerzarge 12, insbesondere der Zargenabdeckung 14 ist ein Aggregatmodul 100, aufweisend einen elastischen Aggregathalter 101 mit einem im Aggregathalter 101 aufgenommenen Aggregat 102. Das Aggregat 102 kann insbesondere eine Pumpe, besonders bevorzugt eine Kühlkreislaufpumpe sein. Der Aggregathalter 101 ist vorzugweise als ein Elastomerhalter ausgebildet und besteht vorzugweise vollständig aus einem Elastomer.

Figur 1 zeigt eine Ausführungsform gemäß welcher das Aggregat 102 als Pumpe ausgebildet ist. Die Pumpe 102 ist in einem Aggregathalter 101 angeordnet und befestigt. Der Aggregathalter 101 weist zum Zwecke der Befestigung des Aggregates an der Kühlerzarge 12 ein erstes Befestigungselement 32a und ein zweites Befestigungselement 32b auf. Die Befestigungselemente 32a, 32b wirken jeweils mit einem Führungselement 34a, 34b der Kühlerzarge 12 zusammen. Vorzugweise greifen die Führungselemente 34a, 34b jeweils formschlüssig in die Befestigungselement 32a, 32b ein.

Die Pumpe 102 weist hier beispielsweise einen Pumpendruckstutzen auf. Der Pumpendruckstutzen ist abhängig von einer entsprechenden Anschlussstelle des Fahrzeugs in einer bestimmten Winkelposition relativ zur Kühlerzarge 12 zu montieren. Die Pumpe 102 wird als Beispiel für ein Aggregat eines Fahrzeugs verwendet.

Wie in Figur 1 deutlich zu erkennen ist, sind die Führungselemente 34a, 34b der Kühlerzarge 12 beabstandet voneinander angeordnet. Der Aggregathalter 101 ist über die Befestigungselemente 32a, 32b zwischen den Führungselementes 34a, 34b im Sinne einer zweiseitigen Einspannung aufgehängt. Aufgrund der zweiseitigen Einspannung können zusätzliche Stabilisierungselemente, wie beispielsweise Versteifungselemente im Elastomerhalter oder zusätzliche Anbindungselemente aus einem formstabilen Material wegfallen. Vorzugweise sind die Führungselemente 32 in einem radial äußeren Randbereich der Kühlerzarge 12 angeordnet. Vorzugweise sind die Führungselemente möglichst weit von der Lüfternabe beabstandet an der Kühlerzarge 12 angeordnet. Bevorzugterweise sind die Führungselemente 32a, 32b in einem Anbindungsbereich der Kühlerzarge 12 am Kraftfahrzeug angeordnet.

Gemäß der in Figur 1 dargestellten Ausführungsform der Erfindung sind die Führungselemente 34a, 34b weiter als die Breite des Aggregates 102 im Anbindungsbereich voneinander beabstandet, sodass das Aggregat 102 mittig zwischen den Führungselementen eingespannt werden kann. Der Aggregathalter weist eine Innenaufnahme 104 auf. Die Innenaufnahme 104 ist vorzugweise der radialen Außenfläche 106 gegenüberliegend angeordnet. Die Innenaufnahme 15 ist vorzugweise diejenige Innenfläche des Aggregathalters 101, welcher dem Aggregat 102 zugewandt ist. Die Innenaufnahme 104 liegt vorzugweise über einen wesentlichen Umfangsbereich des Aggregates 102 am Aggregat 102 kontaktierend an.

Die Kühlerzarge 12 weist nunmehr ein Spreizelement 15 auf, welches dazu ausgebildet ist die Innenaufnahme 104 des Aggregathalters 101 zu spreizen. Das Spreizelement 15 spreizt vorzugweise den Aggregathalter 101 in einem Spreizabschnitt derart auf, dass zwischen der Innenaufnahme 104 des Aggregathalters 101 und dem Aggregat 102 ein Radialspalt ausgebildet ist. Mit anderen Worten, im Spreizabschnitt 17a, 17b wird die Innenaufnahme derart vom Aggregat 102 weggezogen, dass die Innenaufnahme 104 in diesem Abschnitt nicht mehr kontaktierend an der äußeren Mantelfläche des Aggregates 102 anliegt. Dieser Radialspalt kann besonders vorteilhaft zwischen dem Aggregat und der Kühlerzarge Schwingungen und Vibrationen dämpfen und somit als Dämpfungs- und Geräuschentkopplungselement wirken.

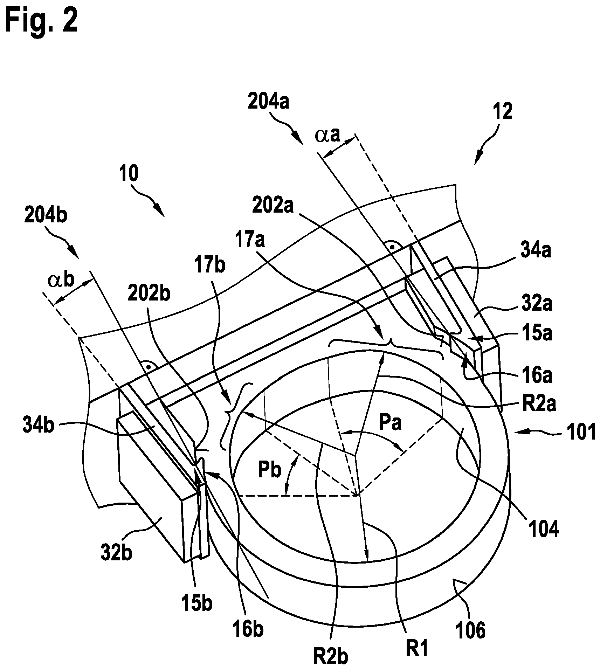

Figur 2 zeigt eine perspektivische Darstellung des Aggregathalters 101 in einer an der Kühlerzarge 12 montierten Position. Zur deutlicheren Sichtbarkeit der Spreizelementabschnitte 15a, 15b, sowie der Spreizabschnitte 17a, 17b ist in Figur 2 das Aggregat 102 nicht dargestellt. Die Kühlerzarge 12 weist vorzugweise ein erstes Führungselement 34a und ein zweites Führungselement 34b auf. Die Führungselemente 23a, 34b ragen vorzugweise über die Kontur der Deckfläche 14 der Kühlerzarge 12. Im montierten Zustand ist das Aggregat 102 mittig zwischen den Führungselementen 34a, 34b angeordnet. Zur Befestigung des Aggregathalters 101 an der Kühlerzarge 12 ist es nunmehr vorgesehen, dass jeweils ein Befestigungselement 32a, 32b mit einem entsprechenden Führungselement 34a, 34b zusammenwirkt.

Vorzugweise erstecken sich die Führungselementen 34a, 34b über die Kontur der Kühlerzargenebene hinaus. Die Führungselementen 34a, 34b sind vorzugweise als Vorsprünge ausgebildet. Vorzugweise weist jedes Führungselementen 34a, 34b einen Einführschlitz 200a, 200b auf. Vorzugweise sind die Führungselementen 34a, 34b als im Wesentlichen dünnwandige Vorsprünge ausgebildet. Der Einführschlitz 200a, 200b ist vorzugsweise einseitig offen ausgebildet, sodass das entsprechende Befestigungselement 32a, 32b von der Öffnungsseite eingeschoben werden kann.

Gemäß einer vorteilhaften Weiterbildung der Erfindung sind die Führungselemente 34a, 34b jeweils in Richtung des Aggregates 102 geneigt an der Kühlerzarge 12 angeordnet. Gemäß der in Figur 2 dargestellten Ausführungsform der Erfindung sind die Führungselemente jeweils unter einem Spreizwinkel a zwischen 1° und 20°, vorzugweise zwischen 2° und 15°, besonders vorzugsweise zwischen 3° und 10° zur Kühlerzargenflächennormalen 204a, 204b angeordnet ist. Gemäß einer vorteilhaften Weiterbildung der Erfindung weisen die Einführschlitze 200a, 200b denselben Spreizwinkel aauf. Aufgrund des Spreizwinkels a wird der Aggregathalter 102 beim Einspannen lokal radial nach außen gezogen, sodass die entsprechenden Spreizabschnitte 17a, 17b entstehen.

Gemäß der in Figur 2 dargestellten Ausführungsform der Erfindung weisen die Führungselemente 34a, 34b jeweils ein Spreizelementabschnitt 15a, 15b des Spreizelementes 15 auf. Die Spreizelementabschnitte 15a, 14b sind vorzugweise jeweils als Spreiznasen oder Rastnasen ausgebildet. Durch das Einschieben des Führungselementes 34a, 34b unter dem Spreizwinkel a und das Wirkflächenpaar zwischen der Spreiznase und einer am Befestigungselement 322a, 32b ausgebildeten, korrelierenden Aufnahme 201a, 201b kann die Innenaufnahme 104 lokal derat vom Aggregat gelöst werden, dass im entsprechenden Spreizabschnitt 17a, 17b ein Radialspalt zwischen der Innenaufnahme 104 des Aggregathalters und der minimal - beabstandeten Mantelfläche des Aggregates 102 entsteht. Dieser Spreizabschnitt 17a, 17b beeinflusst das Dämpfungs- und Entkopplungsverhalten maßgeblich. Mit anderen Worten das Spreizelement 15 ist in der Lage lokal über einen verhältnismäßig kleinen Umfang die Innenaufnahme 104 vom Aggregat zu Lösen ohne dabei die Befestigungsfunktion zwischen Aggregathalter und Aggregat negativ zu beeinflussen.

Die Führungselemente 34a, 34b sind vorzugweise einstückig mit der Kühlerzarge 12 ausgebildet. Vorzugweise werden die Anbindungselemente 35a, 35b mit der Zargenabdeckung 14 in einem Spitzgussverfahren angespritzt.

Gemäß einer vorteilhaften Weiterbildung der Erfindung sind im Spreizabschnitt 17a, 17b der Innenaufnahme 104 die Mantelfläche des Aggregates 102 und die Innenaufnahme 104 beabstandet voneinander ausgebildet. Vorzugweise weist dieser Abstand zwischen 0,5 und einigen wenigen mm auf. Die Innenaufnahme 104 des Aggregathalters 101 wird von den jeweiligen Spreizelementabschnitten 15a, 15b in einem ersten Spreizabschnitt 17a und einem zweiten Spreizabschnitt 17b verformt, insbesondere elastisch verformt. Außerhalb der Spreizabschnitte 17a, 17b liegt die Innenaufnahme kontaktierend an der äußeren Mantelfläche des Aggregates 102 an.

Vorzugweise bringen der erste Spreizelementabschnitt 15a und der zweite Spreizelementabschnitt 15b jeweils eine erste Spreizkaft F1 und eine zweite Spreizkraft F2 auf den Aggregathalter 101 auf. Vorzugweise sind die Spreizkraftvektoren der Spreizkräfte F1, F2 zueinander im Wesentlichen entgegengesetzt ausgerichtet. Wie in Figur 2 zu erkennen ist, sind gemäß einer vorteilhaften Weiterbildung die Befestigungselemente 32a, 32b jeweils an einer Außenfläche 106 des Aggregathalters angeordnet. Vorzugweise liegen sich die Befestigungselemente 32a, 32b im Wesentlichen gegenüber. Vorzugweise ist der Aggregathalter 101 aufweisend die Befestigungselemente 32a, 32b einteilig ausgebildet.

Gemäß einer vorteilhaften Weiterbildung der Erfindung überdecken die Spreizabschnitte 17a, 17b jeweils einen Umfangswinkel φa, φb zwischen 35° und 85°, insbesondere zwischen 50° und 70° besonders bevorzugt von im Wesentlichen 60° der Innenaufnahme 104. Auf diese Weise kann eine ausreichend große Dämpfungswirkung bereitgestellt werden und gleichzeitig die Befestigung des Aggregates im Aggregathalter gesichert werden. Durch das Auseinanderziehen des Aggregathalters durch das Spreizelement 15 weist die Innenaufnahme des Aggregathalters 101 im montierten Zustand eine unrunde Kontur auf. Vorzugweise ist die Kontur abschnittsweise oval ausgebildet. Gemäß einer vorteilhaften Weiterbildung der Erfindung ist der Radius R2a, R2b der Spreizabschnitte 17a, 17b im montierten Zustand vom Radius R1 der Innenaufnahme 104 zum Mittelpunkt abweichend.

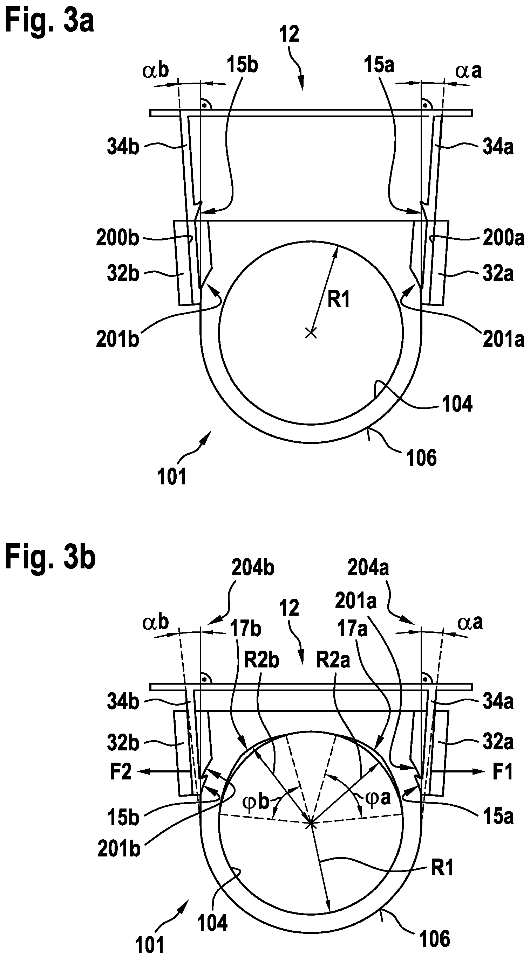

Figur 3a zeigt einen Aggregathalter 101 vor der Montage an der Kühlerzarge 12, Figur 3b nach der Montage. Vor der Montage weist ist die Innenaufnahme 104 zylinderförmig ausgebildet und weist vorzugweise einen Innenradius R1 auf. Die Befestigungselemente 32a, 32b sind an der radialen Außenseite des Aggregathalters 191 angeordnet. Jedes Befestigungselement 32a, 32b weist vorzugweise einen Einführschlitz 200a, 200b auf, in welchen das an der Kühlerzarge 12 angeordnete Führungselement 34a, 34b eingeschoben wird. Die Führungselemente 34a, 34b stehen über die Kontur der Kühlerzargenebene hinaus. Wie in Figur 3a deutlich zu erkennen ist, weisen die Führungselemente 34a, 34b einen Spreizwinkel αa, αb zur Kühlerzargenflächennormalen 204a, 204b auf. Vorzugweise sind die beide Speizwinkel αa, αb im Wesentlichen gleich groß. Vorzugsweise beträgt der Spreizwinkel zwischen 1° und 20°, vorzugweise zwischen 2° und 15°, besonders vorzugsweise zwischen 3° und 10°. Beim Einführen des Führungselementes 34a, 34b in den Entsprechenden schrägen Einführschlitz 200a, 200b wird der Aggregathalter im Bereich des Befestigungselementes 32a, 32b derart radial nach außen gezogen, dass die Spreizabschnitte 17a, 17b entstehen, innerhalb welcher die Innenaufnahme 104 nicht mehr kontaktierend am zu befestigenden Aggregat 100 anliegen. Die Führungselemente 32a, 32b weisen vorzugweise an ihrem distalen Ende jeweils eine Rastnase, beziehungsweise einen Rasthaken auf. Vorzugweise liegt dieser Rasthaken im montierten Zustand an einer Aufnahme 201a, 201b des Befestigungselementes 32a, 32b an, sodass ein Wirkflächenpaar zur Übertragung der Spreizkräfte auf die Innenaufnahme 104 bereitgestellt werden kann.

Gemäß einer vorteilhaften Weiterbildung der Erfindung sind die Aufnahmen 201a, 201b als Anschlagsflächen im Befestigungselement 32a, 32b ausgebildet. Die Rasthaken greifen vorzugweise formschlüssig in die als Hinterschnitt ausgebildete Aufnahme 201a, 201b.

Figur 3b zeigt den Aggregathalter 101 und die Führungselemente 34a, 34b in einer montierten Position. Wie in Figur 3b deutlich zu erkennen ist, wird über die Führungselemente 34a, 34b jeweils eine Spreizkraft F1, F2 auf den Aggregathalter 101 übertragen. Die Spreizabschnitte 17a, 17b jeweils einen Umfangswinkel αa, αb zwischen 35° und 85°, insbesondere zwischen 50° und 70° besonders bevorzugt von im Wesentlichen 60° der Innenaufnahme 104. Im Bereich der Spreizabschnitte 17a, 17b sind der Aggregathalter 101 und das Aggregat 102 beabstandet voneinander angeordnet. Außerhalb der Spreizabschnitte 17a, 17b liegt im montierten Zustand die Innenaufnahme 104 kontaktierend am Aggregat 102an.

Durch das Auseinanderziehen des Aggregathalters 102 mittels der Spreizelemente 15a, 15b weist die Innenaufnahme 104 des Aggregathalters 101 im montierten Zustand eine unrunde Kontur auf. Vorzugweise ist die Kontur abschnittsweise oval ausgebildet. Gemäß einer vorteilhaften Weiterbildung der Erfindung ist der Radius R2a, R2b der Spreizabschnitte 17a, 17b im montierten Zustand vom Radius R1 der Innenaufnahme 104 zum Mittelpunkt abweichend.

## Patentansprüche

1. Kühlerlüftermodul (10) für ein Fahrzeug, aufweisend eine Kühlerzarge (12) und ein an der Kühlerzarge (10) befestigtes Aggregatmodul (100), aufweisend einen elastischen Aggregathalter (101) und ein im Aggregathalter (101) aufgenommenes Aggregat (102), wobei der Aggregathalter (101) eine das Aggregat (102) umschließende Innenaufnahme (104) aufweist, **dadurch gekennzeichnet, dass** die Kühlerzarge (12) ein Spreizelement (15, 15a, 15b) aufweist, welches dazu ausgebildet ist die Innenaufnahme (104) des Aggregathalters (101) zu spreizen, wobei die Kühlerzarge (12) eine erstes Führungselement (34a) und ein, vom ersten Führungselement (34a) beanstandetes zweites Führungselement (34b) aufweist, wobei die Führungselemente (34a, 34b) jeweils formschlüssig mit einem ersten Befestigungselement (32a) und einem zweiten Befestigungselement (32b) des Aggregathalters (101) zusammenwirken, wobei die Führungselemente (34a, 34b) jeweils einen ersten Spreizelementabschnitt (15a) und einen zweiten Spreizelementabschnitt (15b) des Spreizelementes (15) aufweisen und wobei die Innenaufnahme (104) des Aggregathalters (101) von den Spreizelementabschnitten (15a, 15b) in einem ersten Spreizabschnitt (17a) und einem zweiten Spreizabschnitt (17b) verformt ausgebildet ist.

2. Kühlerlüftermodul (10) nach Anspruch 1, **dadurch gekennzeichnet, dass** das Spreizelement (15, 15a, 15b) den Aggregathalter (101) in einem Spreizabschnitt (17a, 17b) derart aufspreizt, dass zwischen der Innenaufnahme (104) des Aggregathalters (101) und dem Aggregat (102) ein Radialspalt ausgebildet ist.

3. Kühlerlüftermodul (10) nach einem der vorhergehenden Ansprüche, **dadurch gekennzeichnet, dass** im Spreizabschnitt (17a, 17b) die Innenaufnahme (104) des Aggregathalters (101) und das Aggregat (102), insbesondere eine Mantelfläche des Aggregates (102), voneinander beabstandet ausgebildet sind.

4. Kühlerlüftermodul (10) nach einem der vorhergehenden Ansprüche, **dadurch gekennzeichnet, dass** die Innenaufnahme (104) außerhalb der Spreizabschnitte (17a, 17b) im Wesentlichen vollständig am Aggregat (102) anliegt.

5. Kühlerlüftermodul (10) nach einem der vorhergehenden Ansprüche, **dadurch gekennzeichnet, dass** die Innenaufnahme (104) vor der Montage an den Führungselementen (34a, 34b) der Kühlerzarge (12) eine im Wesentlichen zylinderförmige Kontur aufweist, wobei die Spreizelementabschnitte (15a, 15b) dazu ausgebildet sind im jeweiligen Spreizabschnitt (17a, 17b) die Innenaufnahme aus der zylinderförmigen Kontur radial nach außen zu ziehen.

6. Kühlerlüftermodul (10) nach einem der vorhergehenden Ansprüche, **dadurch gekennzeichnet, dass** der erste Spreizelementabschnitt (15a) und der zweite Spreizelementabschnitt (15b) jeweils eine erste Spreizkaft (F1) und eine zweite Spreizkraft (F2) auf den Aggregathalter (101) aufbringen, wobei die Spreizkraftvektoren der Spreizkräfte (F1, F2) zueinander entgegengesetzt ausgerichtet sind

7. Kühlerlüftermodul (10) nach einem der vorhergehenden Ansprüche, **dadurch gekennzeichnet, dass** die Befestigungselemente (32a, 32b) des Aggregathalters (102) an einer radialen Außenseite (106) des Aggregathalters (102), insbesondere diametral gegenüberliegend angeordnet sind.

8. Kühlerlüftermodul (10) nach einem der vorhergehenden Ansprüche, **dadurch gekennzeichnet, dass** die Spreizabschnitte (17a, 17b) jeweils einen Umfangswinkel (φa, φb) zwischen 35° und 85°, insbesondere zwischen 50° und 70° besonders bevorzugt von im Wesentlichen 60° überdecken.

9. Kühlerlüftermodul (10) nach einem der vorhergehenden Ansprüche, **dadurch gekennzeichnet, dass** der Radius (R2a, R2b) der Spreizabschnitte (17a, 17b) im montierten Zustand vom Radius (R1) der Innenaufnahme (104) im unmontierten Zustand abweicht.

10. Kühlerlüftermodul (10) nach einem der vorhergehenden Ansprüche, **dadurch gekennzeichnet, dass** die Innenaufnahme (104) nach der Montage an den Führungselementen (34a, 34b) der Kühlerzarge (12) eine unrunde, insbesondere eine im Wesentlichen ovale Kontur aufweist.

11. Kühlerlüftermodul (10) nach einem der vorhergehenden Ansprüche, **dadurch gekennzeichnet, dass** die Spreizelementabschnitte (15a, 15b) als Spreizhaken, insbesondere als Rasthaken ausgebildet sind, wobei insbesondere die Befestigungselemente (32a, 32b) jeweils eine Aufnahme (201a, 201b) für die Spreizhaken aufweisen.

12. Kühlerlüftermodul (10) nach einem der vorhergehenden Ansprüche, **dadurch gekennzeichnet, dass** die Aufnahme (201a, 201b) als eine Anschlagsfläche im jeweiligen Befestigungselement (32a, 32b) ausgebildet ist.

13. Kühlerlüftermodul (10) nach einem der vorhergehenden Ansprüche, **dadurch gekennzeichnet, dass** der Aggregathalter (101), aufweisend die Befestigungselemente (32a, 32b), einteilig ausgebildet ist und/oder, dass die Führungselemente (34a, 34b) und der jeweilige Spreizelementabschnitt (15a, 15b) einteilig ausgebildet sind.

14. Kühlerlüftermodul (10) nach einem der vorhergehenden Ansprüche, **dadurch gekennzeichnet, dass** die Führungselemente (34a, 34b) in Richtung des Aggregates (102) geneigt an der Kühlerzarge (12) angeordnet sind, insbesondere unter einem Spreizwinkel (α) zwischen 1° und 20°, vorzugweise zwischen 2° und 15°, besonders vorzugsweise zwischen 3° und 10° zur Kühlerzargenflächennormalen (204a, 204b) angeordnet ist.

15. Kühlerlüftermodul (10) nach einem der vorhergehenden Ansprüche, **dadurch gekennzeichnet, dass** die Führungselemente (32) in einem radial äußeren Randbereich der Kühlerzarge (12) angeordnet sind

## Claims

1. Cooler-fan module (10) for a vehicle, having a cooler shroud (12) and a unit module (100) which is fastened to the cooler shroud (10), said unit module having an elastic unit holder (101) and a unit (102) which is accommodated in the unit holder (101), wherein the unit holder (101) has an inner receptacle (104) surrounding the unit (102), **characterized in that** the cooler shroud (12) has a spreading element (15, 15a, 15b) which is configured to spread the inner receptacle (104) of the unit holder (101), wherein the cooler shroud (12) has a first guide element (34a) and a second guide element (34b), which is spaced apart from the first guide element (34a), wherein the guide elements (34a, 34b) respectively interact in a form-fitting manner with a first fastening element (32a) and a second fastening element (32b) of the unit holder (101), wherein the guide elements (34a, 34b) respectively have a first spreading-element section (15a) and a second spreading-element section (15b) of the spreading element (15), and wherein the inner receptacle (104) of the unit holder (101) is configured so as to be deformed by the spreading-element sections (15a, 15b) in a first spreading section (17a) and in a second spreading section (17b).

2. Cooler-fan module (10) according to Claim 1, **characterized in that** the spreading element (15, 15a, 15b) spreads the unit holder (101) in a spreading section (17a, 17b) in such a way that a radial gap is formed between the inner receptacle (104) of the unit holder (101) and the unit (102).

3. Cooler-fan module (10) according to either of the preceding claims, **characterized in that**, in the spreading section (17a, 17b), the inner receptacle (104) of the unit holder (101) and the unit (102), in particular a lateral surface of the unit (102), are configured so as to be spaced apart from one another.

4. Cooler-fan module (10) according to one of the preceding claims, **characterized in that** the inner receptacle (104) abuts substantially completely against the unit (102) outside the spreading sections (17a, 17b).

5. Cooler-fan module (10) according to one of the preceding claims, **characterized in that**, prior to the mounting on the guide elements (34a, 34b) of the cooler shroud (12), the inner receptacle (104) has a substantially cylindrical contour, wherein the spreading-element sections (15a, 15b) are configured such that, in the respective spreading sections (17a, 17b), the inner receptacle is pulled radially outwards from the cylindrical contour.

6. Cooler-fan module (10) according to one of the preceding claims, **characterized in that** the first spreading-element section (15a) and the second spreading-element section (15b) respectively apply a first spreading force (F1) and a second spreading force (F2) to the unit holder (101), wherein the spreading-force vectors of the spreading forces (F1, F2) are oriented oppositely in relation to one another.

7. Cooler-fan module (10) according to one of the preceding claims, **characterized in that** the fastening elements (32a, 32b) of the unit holder (102) are arranged, in particular diametrically oppositely, on a radial outer side (106) of the unit holder (102).

8. Cooler-fan module (10) according to one of the preceding claims, **characterized in that** that the spreading sections (17a, 17b) respectively cover a circumferential angle (φa, φb) of between 35° and 85°, in particular of between 50° and 70°, particularly preferably of substantially 60°.

9. Cooler-fan module (10) according to one of the preceding claims, **characterized in that** the radius (R2a, R2b) of the spreading sections (17a, 17b) in the mounted state differs from the radius (R1) of the inner receptacle (104) in the non-mounted state.

10. Cooler-fan module (10) according to one of the preceding claims, **characterized in that**, after the mounting on the guide elements (34a, 34b) of the cooler shroud (12), the inner receptacle (104) has a non-round, in particular substantially oval, contour.

11. Cooler-fan module (10) according to one of the preceding claims, **characterized in that** the spreading-element sections (15a, 15b) are in the form of spreading hooks, in particular latching hooks, wherein in particular the fastening elements (32a, 32b) respectively have a receptacle (201a, 201b) for the spreading hooks.

12. Cooler-fan module (10) according to one of the preceding claims, **characterized in that** the receptacle (201a, 201b) is in the form of a stop surface in the respective fastening element (32a, 32b).

13. Cooler-fan module (10) according to one of the preceding claims, **characterized in that** the unit holder (101), having the fastening elements (32a, 32b), is formed in one piece, and/or **in that** the guide elements (34a, 34b) and the respective spreading-element sections (15a, 15b) are formed in one piece.

14. Cooler-fan module (10) according to one of the preceding claims, **characterized in that** the guide elements (34a, 34b) are arranged on the cooler shroud (12) so as to be inclined in the direction of the unit (102), in particular at a spreading angle (α) of between 1° and 20°, preferably of between 2° and 15°, particularly preferably of between 3° and 10°, to the cooler-shroud surface normal (204a, 204b).

15. Cooler-fan module (10) according to one of the preceding claims, **characterized in that** the guide elements (32) are arranged in a radially outer peripheral region of the cooler shroud (12).

## Revendications

1. Module de ventilateur de radiateur (10) pour un véhicule, comportant un carénage de radiateur (12) et un module d'assemblage (100) fixé au carénage de radiateur (10), ayant un support d'assemblage élastique (101) et un ensemble (102) logé dans le support d'assemblage (101), le support d'assemblage (101) comportant un réceptacle interne (104) entourant l'ensemble (102), **caractérisé en ce que** le carénage de radiateur (12) comporte un élément d'écartement (15, 15a, 15b) qui est conçu pour écarter le réceptacle interne (104) du support d'assemblage (101), le carénage de radiateur (12) comportant un premier élément de guidage (34a) et un second élément de guidage (34b) espacé du premier élément de guidage (34a), les éléments de guidage (34a, 34b) coopérant respectivement par complémentarité de formes avec un premier élément de fixation (32a) et un second élément de fixation (32b) du support d'assemblage (101), les éléments de guidage (34a, 34b) comportant respectivement une première partie d'élément d'écartement (15a) et une seconde partie d'élément d'écartement (15b) de l'élément d'écartement (15), et le réceptacle interne (104) du support d'assemblage (101) étant réalisé de manière déformée par les parties d'élément d'écartement (15a, 15b) dans une première partie d'écartement (17a) et une seconde partie d'écartement (17b).

2. Module de ventilateur de radiateur (10) selon la revendication 1, **caractérisé en ce que** l'élément d'écartement (15, 15a, 15b) écarte le support d'assemblage (101) dans une partie d'écartement (17a, 17b) de telle sorte qu'un interstice radial est formé entre le réceptacle interne (104) du support d'assemblage (101) et l'ensemble (102).

3. Module de ventilateur de radiateur (10) selon l'une quelconque des revendications précédentes, **caractérisé en ce que**, dans la partie d'écartement (17a, 17b), le réceptacle interne (104) du support d'assemblage (101) et l'ensemble (102), en particulier une surface latérale du module (102), sont réalisés de manière espacée l'un de l'autre.

4. Module de ventilateur de radiateur (10) selon l'une quelconque des revendications précédentes, **caractérisé en ce que** le réceptacle interne (104) est en appui sensiblement complet contre l'ensemble (102) à l'extérieur des parties d'écartement (17a, 17b).

5. Module de ventilateur de radiateur (10) selon l'une quelconque des revendications précédentes, **caractérisé en ce que** le réceptacle interne (104) présente un contour sensiblement cylindrique avant le montage sur les éléments de guidage (34a, 34b) du carénage de radiateur (12), les parties d'élément d'écartement (15a, 15b) étant conçues pour tirer le réceptacle interne radialement vers l'extérieur hors du contour cylindrique dans la partie d'écartement (17a, 17b) respective.

6. Module de ventilateur de radiateur (10) selon l'une quelconque des revendications précédentes, **caractérisé en ce que** la première partie d'élément d'écartement (15a) et la seconde partie d'élément d'écartement (15b) exercent respectivement une première force d'écartement (F1) et une seconde force d'écartement (F2) sur le support d'assemblage (101), les vecteurs de force d'écartement des forces d'écartement (F1, F2) étant orientés de manière opposée l'un par rapport à l'autre.

7. Module de ventilateur de radiateur (10) selon l'une quelconque des revendications précédentes, **caractérisé en ce que** les éléments de fixation (32a, 32b) du support d'assemblage (102) sont disposés sur un côté extérieur radial (106) du support d'assemblage (102), en particulier de manière diamétralement opposée.

8. Module de ventilateur de radiateur (10) selon l'une quelconque des revendications précédentes, **caractérisé en ce que** les parties d'écartement (17a, 17b) couvrent respectivement un angle circonférentiel (φa, φb) compris entre 35° et 85°, en particulier entre 50° et 70°, et de manière particulièrement préférée de sensiblement 60°.

9. Module de ventilateur de radiateur (10) selon l'une quelconque des revendications précédentes, **caractérisé en ce que** le rayon (R2a, R2b) des parties d'écartement (17a, 17b) à l'état monté diffère du rayon (R1) du réceptacle interne (104) à l'état non monté.

10. Module de ventilateur de radiateur (10) selon l'une quelconque des revendications précédentes, **caractérisé en ce que** le réceptacle interne (104) présente, après montage sur les éléments de guidage (34a, 34b) du carénage de radiateur (12), un contour non circulaire, en particulier sensiblement ovale.

11. Module de ventilateur de radiateur (10) selon l'une quelconque des revendications précédentes, **caractérisé en ce que** les parties d'élément d'écartement (15a, 15b) sont réalisées sous forme de crochets d'écartement, en particulier de crochets d'encliquetage, les éléments de fixation (32a, 32b) présentant en particulier respectivement un réceptacle (201a, 201b) pour les crochets d'écartement.

12. Module de ventilateur de radiateur (10) selon l'une quelconque des revendications précédentes, **caractérisé en ce que** le réceptacle (201a, 201b) est réalisé sous forme de surface de butée dans l'élément de fixation (32a, 32b) respectif.

13. Module de ventilateur de radiateur (10) selon l'une quelconque des revendications précédentes, **caractérisé en ce que** le support d'assemblage (101) comportant les éléments de fixation (32a, 32b) est réalisé d'une seule pièce et/ou **en ce que** les éléments de guidage (34a, 34b) et la partie d'élément d'écartement (15a, 15b) respective sont réalisés d'une seule pièce.

14. Module de ventilateur de radiateur (10) selon l'une quelconque des revendications précédentes, **caractérisé en ce que** les éléments de guidage (34a, 34b) sont disposés sur le carénage de radiateur (12) de manière inclinée en direction de l'ensemble (102), en particulier selon un angle d'écartement (α) compris entre 1° et 20°, de préférence entre 2° et 15°, et de manière particulièrement préférée entre 3° et 10°rapport à la normale (204a, 204b) à la surface du carénage de radiateur.

15. Module de ventilateur de radiateur (10) selon l'une quelconque des revendications précédentes, **caractérisé en ce que** les éléments de guidage (32) sont disposés dans une zone de bord radialement extérieure du carénage de radiateur (12)
